# EUROPEAN PATENT SPECIFICATION

(11) **EP 2 435 611 B1**
(45) Date of publication and mention of the grant of the patent: **07.08.2019**
(21) Application number: 10780806.5
(22) Date of filing: 27.05.2010
(51) Int. Cl.: D06F 23/06, D06F 25/00, D06F 37/22, D06F 39/12, D06F 37/20, D06F 37/26

(54) **LAUNDRY MACHINE**
WASCHMASCHINE
MACHINE À LAVER

(30) Priority: 28.05.2009 KR 20090047192; 27.08.2009 KR 20090079909; 18.05.2010 KR 20100046458
(43) Date of publication of application: 04.04.2012
(73) Proprietor: LG Electronics Inc., Yeongdeungpo-gu Seoul, 07336 (KR)
(72) Inventor: KWON, Ig Geun, Changwon-si Gyeongsangnam-do 641-711 (KR); KIM, Soo Bong, Changwon-si Gyeongsangnam-do 641-711 (KR)
(74) Representative: Ter Meer Steinmeister & Partner
(86) International application number: PCT/KR2010/003379
(87) International publication number: WO 2010/137895

(56) References cited:
- EP-A1- 1 688 531
- EP-A1- 1 975 298
- EP-A1- 2 075 364
- EP-A2- 0 152 745
- EP-A2- 1 433 890
- DE-A1- 4 104 450
- DE-B3-102006 012 035
- JP-A- H10 211 393
- KR-A- 20030 092 185

## Description

### Technical Field

The present invention relates to a laundry machine, more specifically, to a laundry machine which has an improved structure to improve washing efficiency.

### Background Art

Generally, laundry machines are electric appliances which remove various kinds of contaminants attached to clothes, beddings, cloth items and the like (hereinafter, laundry) by way of a friction force of water currents generated by rotation of a drum and a shock applied to laundry including clothes and the other items. A full-automatic laundry machine released in recent has a series of cycles including a washing, rinsing, dry-spinning cycle which are implemented automatically.

In stead of pulsator type laundry machine having a tub rotatable in a state of standing vertically, drum type laundry machines having little problems of entangled laundry and a lot of wrinkles generated in the laundry have been more and more popular recently.

As a structure of such a drum type laundry machine mentioned above is described schematically, the drum type laundry machine includes a cabinet configured to define an exterior appearance thereof, a tub located in the cabinet to receive wash water, with being supported by a damper an a spring, and a cylindrical drum located in the tub to receive laundry therein. The drum receives a driving force from a driving part to implement washing for the laundry loaded into the drum.

According to the structure of the drum type laundry machine mentioned above, the drum is rotated to wash and dry-spin the laundry loaded therein and it is vibrated because of the rotational force of the drum and eccentricity of the laundry. The vibration generated by the rotation of the drum may be transmitted outside via the tub and the cabinet.

Because of that, a spring and a damper are provided essentially between the tub and the cabinet to prevent the vibration transmitted to the tub from transmitted to the cabinet.

The drum type laundry machine mentioned above may be installed in an existing installation circumstance, for example, in a sink or built-in circumstance, not installed separately. As a result, the size of the drum type laundry machine may be installed limited to be adjustable to its installation circumstance.

As mentioned above, it is limited for the structure of the spring and damper dampening the vibration of the tub and the cabinet to change an inner structure of the drum type laundry. As the installation circumstance of the laundry machine is limited, it is limited to change the size of the laundry machine.

A lot of researches and developments have been in progress to improve washing capacities of laundry machines for user convenience and the increased washed laundry amount. However, it is difficult to enlarge the size of the tub in the conventional drum type laundry machine to increase the washing capacity, because of the limitation condition mentioned above.

As a result, laundry machines having various types of structures have been under development to improve the washing capacity as mentioned above.

JP H10 211393 A relates to a drum washing machine with a depressed heating body storage at the bottom of the outer tub. Washing water in an outer tub is heated by applying power to a heater while keeping it at a constant temperature. In case foreign matter falls between the rotary drum and the outer tub by accident, the foreign matter falls to the heating body storage at the bottom of the outer tub and can be removed by loosening a screw from the front and removing the heater.

KR 2003 0092185 A relates to a structure for mounting a heater of a drum washing machine to install the heater accurately and conveniently by inserting both ends of a bracket to fixing grooves with sliding and fixing the lower part of the bracket to a heater mounting part.

DE 41 04 450 A1 relates to washing textiles in an automatic washing machine by using twin drum principle and recycling container to store wash water.

EP 2 075 364 A1 relates to a washing machine including a tub receiving wash water, a heater heating the wash water, and a heater cover surrounding the heater. The washing machine can prevent damage of a tub even when the heater is separated from the tub during operation.

### Disclosure of Invention

### Technical Problem

To solve the problems, an object of the present invention is to provide a drum type laundry machine having a new structure, different from the conventional laundry machine, specifically, a drum type laundry machine having a new heater securing part in a tub different from the conventional laundry machine.

### Solution to Problem

The object is solved by the features of the independent claim. According to one aspect, a laundry machine includes a tub configured to receive wash water; a drum rotatably installed in the tub; a shaft connected with the drum; a driving part comprising a shaft connected with the drum, a bearing housing configured to rotatably support the shaft and a motor configured to rotate the shaft; a suspension unit configured to support vibration of the drum suspendingly; and a heater securing part expanded to an outside of the tub from a lower part of the drum, the heater securing part configured to install the heater configured to heat the wash water therein.

The heater securing part may be formed by recessing a predetermined portion of a front lower part of the tub in a backward direction of the tub.

A flat part may be formed in the front lower portion of the tub according to the recessing of the heater securing part.

A hole configured to secure the heater thereto may be formed in a front surface of the heater securing part, below the flat part.

A water wall rib may be formed above the flat part to form a path of the water leaking from the front part of the tub.

The water wall rib may have a center which is convex upward.

The heater securing part may be a sump configured to collect wash water therein.

The tub includes a tub front configured to form a front part of the tub and a tub rear configured to form a rear part of the tub, and the heater securing part includes a front heater securing part formed in a lower part of the tub front and a rear heater securing part formed in a lower part of the tub rear.

The front heater securing part may be formed by recessing a predetermined portion of a front surface of the tub front in a backward direction of the tub front.

The front heater securing part may be getting more and more oblique downward along a backward direction.

A drainage hole may be formed in a center of the rear heater securing part to drain the wash water there through.

Both sides of the rear heater securing part may be oblique upward with respect to the drainage hole.

The heater is obliquely installed to locate a rear end thereof below a front end thereof.

The suspension unit may be connected with the bearing housing. Here, the suspension unit may include a supporting bracket extended toward a front part of the bearing housing in parallel to the shaft and a cylinder damper configured to support the supporting bracket.

The laundry machine may further include a rear gasket configured to seal between the tub and the driving part to prevent wash water from leaking between the tub and the driving part and to allow the driving part to relative-move with respect to the tub. The tub may be supported by the suspension unit more rigidly than the drum is supported.

In the meanwhile, according to the laundry machine, the tub may be fixedly installed or supported by a flexible structure such as the suspension unit. Or the supporting of the tub may be in the middle of the suspension supporting and the fixed supporting.

That is, the tub may be supported flexibly by using the suspension unit which will be described in detail in the description of the invention, or it may be supported more rigidly than the flexible supporting. For example, the tub may be supported by the suspension unit or a rubber bushing which can give a predetermined flexible motion to the tub, less flexible than the support by way of the suspension unit. Or the tub may be fixedly installed.

Examples of tubs supported more rigidly than the supporting of the suspension unit will be followed.

First of all, a predetermined portion of the tub may be integrally formed with the cabinet.

Second, the tub may be connected and supported by a screw, rivet, rubber bushing and the like or fixedly welled, adhered or sealed. In this case, the rigidity of the suspension unit is stronger than the rigidity of these connecting materials with respect to a vertical direction which is a main vibration direction of the drum.

Such the tub may be enlarged in a possible limited installation space. That is, the tub may be enlarged to be adjacent to a wall or frame, which limits the horizontal size of the installation space, with respect to at least a right and left direction orthogonal to a shaft direction if the shaft is horizontally installed. Here, the tub may be integrally formed with a right or left wall of the cabinet.

The tub may be closer to the wall or frame than to the drum in the right and left direction. For example, the tub may be 1.5 times or less as distant from the wall or frame by as from the drum. In the state of the tub enlarged in the right and left direction, the drum may be also enlarged in the right and left direction. As the right and left direction distance is getting smaller between the tub and the drum, the drum may be enlarged in the right and left direction as much. The right and left direction vibration of the drum may be put into consideration to reduce the right and left direction distance between the tub and the drum. As the right and left direction vibration of the drum is getting smaller, the diameter of the drum may be enlarged more. As a result, the right and left direction rigidity of the suspension unit configured to suspend the vibration of the drum may be larger than the other direction rigidity. For example, the rigidity of the suspension unit with respect to right and left direction displacement may be the maximum with respect to the other direction rigidity.

Furthermore, the suspension unit may be directly connected with the bearing housing configured to support the shaft connected with the shaft, different from the suspension unit connected via the tub according to the conventional laundry machine. That is, the bearing housing may include a supporting part configured to support the shat and an extending part extended from the supporting part. The suspension unit may be coupled to the supporting part or the extending part of the bearing housing.

At this time, the suspension unit may include a bracket extended with respect to the shaft direction and the bracket may be extended forward to the door.

The suspension unit may include at least two suspensions distant from each other in the shaft direction.

The suspension unit may include a plurality of suspensions installed below the shaft to standing-support a supporting object, for example, the drum. The suspension unit may include a plurality of suspensions installed beyond the shaft to hang the supporting object thereto. According to these cases, suspensions are provided only below or beyond the shaft.

The gravity center of the vibration system including the drum, shaft, bearing housing and motor may be located in at least predetermined portion adjacent to the motor with respect to a longitudinal shape of the drum.

At least one suspension may be in front or rear of the gravity center or suspensions may be installed in front and rear of the gravity center, respectively.

The tub may include an opening formed in a rear part thereof. A driving part including the shaft, bearing housing and motor may be connected with the tub via a flexible material. The flexible material seals the opening formed in the rear part of the tub to prevent wash water from flowing out of the tub via the opening and to enable the driving part to relative-move with respect to the tub. Such the flexible material may be any flexible material which can seal, for example, gasket material such as front gasket. In this case, the flexible material may be named as rear gasket corresponding to the front gasket. The connection of the rear gasket with the driving part may be implemented in a rotational constrained state with respect to the rotational direction of the shaft. According to an embodiment, the rear gasket may be directly connected with the shaft or it may be connected with the extending part of the bearing housing.

A predetermined portion of the driving part which is located in a front connection with the rear gasket only to be exposed to wash water may be made of anticorrosive material. For example, the portion may be coated or covered with an auxiliary plastic-made part, for example, a tub back which will be described in detail. If there is a metal-made portion of the driving part, the metal-made portion may not be exposed to water directly and corrosion may be prevented accordingly.

Here, the cabinet may not be provided, different from the embodiment of the present invention. For example, a built-in laundry machine may be provided in a wall, instead of the cabinet. That is, the laundry machine may be fabricated without the cabinet configured to define the exterior appearance of the laundry machine. Even in this case, the front part of the cabinet may be formed.

### Advantageous Effects of Invention

The present invention has following advantageous effects.

According to the laundry machine of the present invention, a drum type laundry machine having a totally different new structure is provided. As a result, the vibration of the drum is not transmitted to the tub and it may be suspendingly supported.

### Brief Description of Drawings

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 an exploded perspective view illustrating a laundry machine according to an exemplary embodiment of the present invention;
FIGS. 2 and 3 are perspective view illustrating a tub front of the laundry machine;
FIG. 4 is a rear perspective view illustrating a tub rear of the laundry machine;
FIG. 5 is a perspective illustrating a suspension of the laundry machine according to the present invention;
FIG. 6 is a side view illustrating a coupling state between the tub and the suspension provided in the laundry machine according to the present invention;
FIG. 7 is a rear perspective view illustrating a tub front of the laundry machine according to the present invention;
FIG. 8 is a front perspective view illustrating a tub rear of the laundry machine according to the present invention; and
FIG. 9 is a sectional view illustrating a heater sump of the laundry machine according to the present invention.

### Best Mode for Carrying out the Invention

Reference will now be made in detail to the specific embodiments of the present invention, examples of which are illustrated in the accompanying drawings. Wherever possible, the same reference numbers will be used throughout the drawings to refer to the same or like parts.

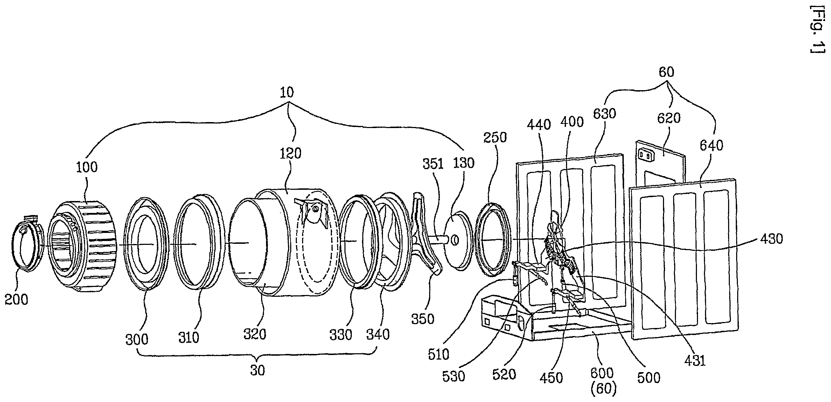

FIG. 1 is an exploded perspective view illustrating a laundry machine according to an exemplary embodiment of the present invention.

As shown in FIG. 1, the laundry machine includes a tub fixedly to a cabinet 60. The tub 10 includes a tub front 100 configured to define a front portion of the tub 10 and a tub rear 120 configured to define a rear portion of the tub 10. The tub front 100 and the tub rear 120 are assembled by screws and a predetermined space is formed in the assemble tub front and tub rear 120 to accommodate a drum 30. The tub 10 may further include a tub back configured to form a rear surface of the tub 10 and the tub back is connected with the tub rear 120 via a rear gasket 250. The rear gasket 250 may be made of flexible material not to transmit the vibration of the tub back 130.

The cabinet defines an exterior appearance of the laundry machine and it includes a cabinet front (not shown), a cabinet rear 620, a cabinet left 640, a cabinet right 630, a cabinet top (not shown) and a cabinet base 600.

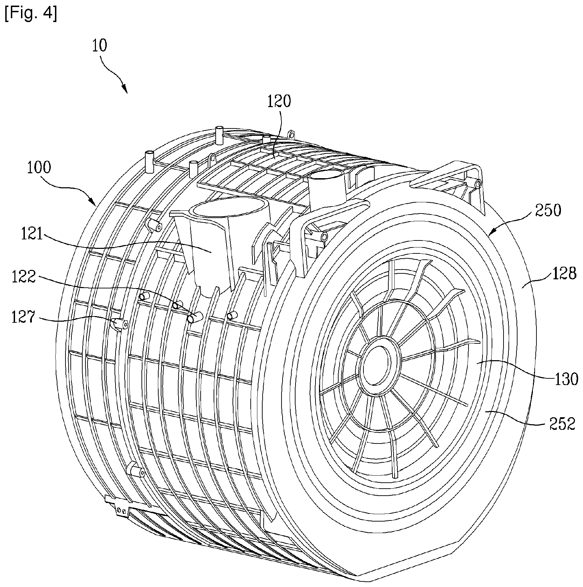

The tub rear 120 has a rear surface 128 and the rear surface 128 of the tub rear 120, the tub back 130 and the rear gasket 250 forms a rear surface of the tub 10. The rear gasket 250 is sealed and connected with both of the tub back 130 and the tub rear 120, such that wash water inside the tub 10 may not leak. The tub back 130 is rotated together with the drum 30 when the drum 30 is rotated. At this time, the tub back 130 is distant from the tub rear 120 a predetermined distance not to interfere with the tub rear 120. Since the rear gasket 250 is made of flexible, the tub back 130 is relative-moved, not interfering with the tub rear 120. The rear gasket 250 may include a corrugated part (252, see FIG. 4) extendible enough to enable this relative-motion.

A foreign substance preventing material 200 is provided in a front part of the tub front 100 to prevent foreign substances from coming between the tub 10 and the drum 30. The foreign substance preventing material 200 is flexible material and it is fixedly installed to the tub front 100. Here, the foreign substance preventing material 200 may be made of a predetermined material identical to the material of rear gasket 250.

The drum 30 is configured of a drum front 300, a drum center 320 and a drum back 340. Ball balancers may be installed in front and rear parts of the drum 30, respectively. The drum back 340 is connected with a spider 350 and the spider 350 is connected with a shaft 351. The drum 30 is rotated in the tub 10 by a rotational force transmitted via the shaft 351.

The shaft 351 is directly connected with a motor, passing through the tub back 130. Specifically, a rotor (not shown) of the motor is directly connected with the shaft 351. A bearing housing 400 is coupled to a rear surface 128 of the tub back 130 and the bearing housing 400 rotatably supports the shaft 351, located between the motor and the tub back 130.

A stator is fixedly installed in the bearing housing 400 and the rotor is located around the stator. As mentioned above, the rotor is directly connected with the shaft 351. Here, the motor may be an outer rotor type motor connected with the shaft 351 directly.

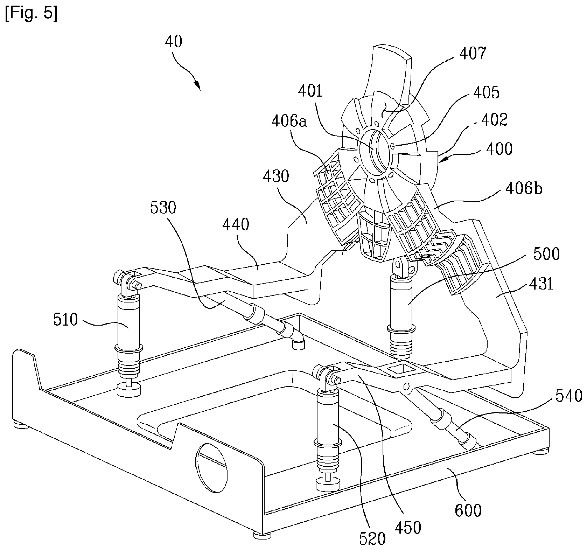

A suspension unit (40, see FIG. 5) located from the cabinet base 600 to support the bearing housing 400. The suspension unit 40 includes three spring cylinder damper 500, 5100, and 520 and two cylinder damper 530 and 540 configured to obliquely support the bearing housing 400 in a forward and backward direction. The suspension unit 40 is connected to the cabinet base 600 flexibly to allow the drum 30 to move in forward/backward and rightward/leftward direction, not completely fixed to the cabinet base 600.

That is, the suspension unit 40 is flexible enough to allow the predetermined forward/backward and rightward/leftward rotation of the drum 30 with respect to the supporting point of the suspension unit connected with the cabinet base 600. Perpendicular suspensions may be installed in the cabinet base 600 in the media of a rubber bushing (not shown). Perpendicular ones of the suspensions are used to suspend the vibration of the drum 30 elastically and oblique ones of them are used to dampen the vibration of the drum 30. That is, the perpendicular one is employed as spring out of a vibration system including a spring and damping means and the oblique ones as damping means.

The other parts of the tub 10 may be fixedly installed to the cabinet, except the tub back 130 and the vibration of the drum 30 is suspended and supported by the suspension unit. Substantially, the tub 10 and the drum 30 have a separate supporting structure. Even if the drum 30 is vibrated, the tub 10 may not be vibrated.

As follows, each element will be described in detail.

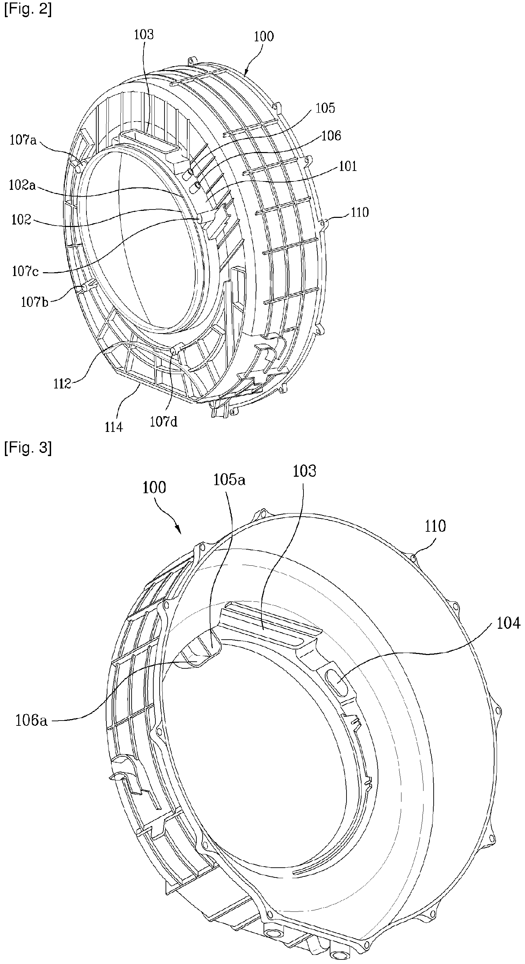

FIGS. 2 and 3 are diagrams illustrating the tub front 100. The tub front 100 includes a donut-shaped perpendicular front surface provided in a front portion of a cylindrical surface composing a predetermined portion of a side wall of the tub. A rear portion of the cylindrical surface is open as it is and the rear portion includes a plurality of securing holes 110 formed therein. The securing holes 110 are secured to corresponding securing holes (127, see FIG. 4) of the tub rear 120.

A rim part 101 is extended forward from an inner circumferential surface of the front surface of the tub front 100. The width of the rim part 101 is getting narrower downward from the top and substantially the rim part 101 may not be formed at a lower portion of an inner corner of the front surface.

In the rim part 101 may be formed a water supply inlet 104 configured to supply wash water, a hot air inlet 103 which will be used in a drying course, a circulating-water inlet 106 configured to drawn the wash water circulated by a circulation pump there through and a steam inlet 105 configured to draw steam there through.

Since the vibration of the tub 10 is noticeably reduced in the laundry machine according to the present invention, a water supply structure of a water supply hose, a drying structure of a drying duct and a steam supply structure, a circulating-water supply structure and the like may be implemented stably.

The hot air inlet 103 may be extended from the rim part 101 approximately in a square shape. Here, the hot air inlet 103 is required by a laundry machine having washing and drying functions and not by a laundry machine having no drying function.

The water supply inlet 104, the hot air inlet 103 and the like are formed in the front part of the tub front 100. Because of that, the supply of wash water, hot air and the like may be implemented in the front part of the tub 10.

The water supply inlet 104 and the other components may be located more forwardly than a front end of the drum 30 accommodated in the tub 10. As a result, the wash water, hot air and the like may be directly drawn into the drum 30 via the opening of the drum 30 configured to load the laundry therein or there out. Since fluidal material supplied to treat the laundry such as the wash water and hot air may be directly drawn into the drum 30 and this enables the laundry to be treated more efficiently.

In case detergent is supplied via a detergent box, together with the wash water, the detergent is directly drawn into the drum 30 and the amount of used detergent may be reduced accordingly, such that the amount of wash water may be reduced.

Here, a problem of tub contamination generated by detergent remnant loaded in a bottom of the tub may be solved. In case water is supplied from the front part of the tub, a door glass (not shown) may be washed by the supplied water advantageously.

Even if hot air is supplied via the front portion of the tub, a perpendicular surface of the tub front 100, that is, a front surface thereof, the hot air flow may be '⊂'-shaped, which is a complex air path formed by the hot air re-bent toward a perpendicular front surface of the tub after hot air having flown from the rear portion of the tub is bent downward from a front portion of a upper part of the tub. This 'c'-shaped air path will not be helpful to efficient hot air flow. However, when the hot air inlet 103 is formed in the rim part 101 of the tub front 100, the hot air may be bend perpendicularly one time and it may flow smoothly.

The water inlet 104 and the other holes may be located beyond a center of the drum. Because of that, the wash water and the like may be supplied to the drum inside from a front upper portion of the drum. If it is necessary to supply the wash water and the like to the drum inside from a front lower portion of the drum, the rim part 101 of the tub front 100 may be formed in a lower portion of the front surface part. if it is necessary to supply the wash water and the like in a right and left direction, not in the upward and downward direction mentioned above, the rim part 101 may be formed in a inner corner center portion 131 of the front surface part. That is, the appearance of the rim part 101 may be variable according to which direction the supplied fluidal material is supplied along.

A coupling part 102 is formed in the rim part 101 to couple the foreign substance preventing material 200 to the tub front 100. The coupling part 102 is extended forward from the front end of the rim part 101, having a small cylindrical surface-like shape. Ribs 102a are formed in an outer circumferential surface of the small cylindrical surface.

Once the coupling part 102 is inserted in the foreign substance preventing part 200, the foreign substance preventing part 200 may be coupled to the coupling part 102. for that, inserting recesses (not shown) are formed in the foreign substance preventing material 200 and the small cylindrical surface having the ribs 102a formed therein is inserted in the inserting recess (not shown).

The tub front 100 is fixedly coupled to the cabinet front (not shown) and coupling bosses 107a, 107b, 107c and 107d are formed in the front surface of the tub front 100 for such the fixed coupling, approximately surrounding the rim part 101. After the cabinet front (not shown) is located in a state of the tub front 100 installed, screws are fastened backward to couple the tub front 100 to the cabinet front.

FIG. 3 is a rear view illustrating an inside of the tub front 100. The steam inlet 105 may be connected with a seam hose. A steam guide 105a is formed in the tub front 100 to guide steam drawn via the steam inlet 105 toward a drum inside and a circulating-water guide 106a is formed in the tub front 100 to guide circulating-water drawn via the circulating-water inlet 106 toward the drum inside. The steam inlet 105, the circulating-water inlet 106, the steam guide 105a, the circulating-water guide 106 and the like may be integrally formed with the tub front 100. The tub front 100 is plastic-injection-molded and the steam inlet 105 and the other components may be injection-molded as some parts of the tub front 100.

The tub front 100 is coupled to the tub rear 120 to form a predetermined space configured to accommodate the drum 30. Here, the tub front 100 and the tub rear 120 may be screw-fastened to each other. For this screw-fastening, a plurality of screw-securing holes 110 may be formed along a circumference of the rear part of the tub front 100.

FIG. 4 is a diagram illustrating the connection among the tub front 100, the tub rear 120, the tub back 130 and the rear gasket 250.

The tub rear 120 is cylindrical-shaped to surround the drum 30 and a front part of the tub rear is open and a rear part of the tub rear includes a donut-shaped rear surface 128. The front part is sealing-coupled to the tub front 100. A diameter of the rear surface 128 of the tub rear 120 is larger than an outer diameter of the tub back 130. Even when the tub back 130 is vibrated, the tub back 130 is distant from the tub rear 120 enough not to interfere with the rear surface 128 of the tub rear 120.

The rear gasket 250 is provided between the rear surface 128 of the tub rear 120 and the tub back 130. The rear gasket 250 seals the rear surface 128 of the tub rear 120 and the tub back 130 and it includes a corrugated part 252 flexible enough not to interfere with the vibration of the tub back 130.

A hot air inlet 121 is formed in a predetermined portion of the tub rear 120 in case of the laundry machine having washing and drying functions. In case of the laundry machine only having the washing function, the hot air outlet 121 may be not provided, of course.

An auxiliary structure configured to fixedly support the tub with respect to the base is formed in lower parts of the tub rear 120 and the tub front 100.

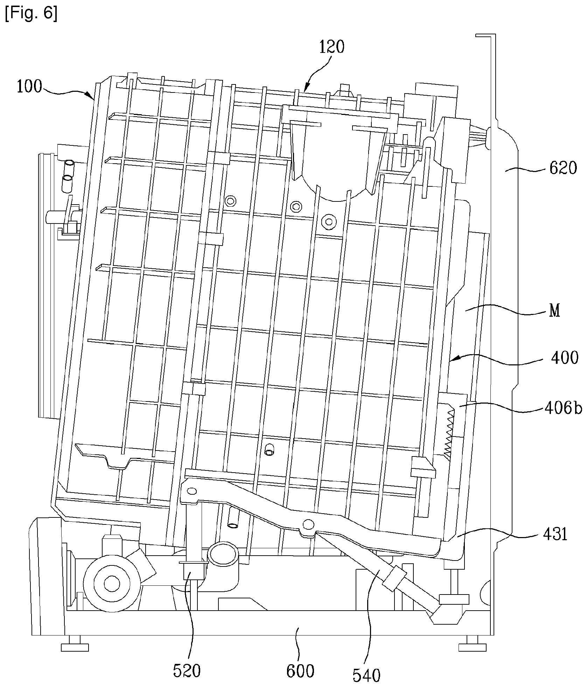

FIG. 5 is a diagram illustrating the suspension unit 40 mounted on the base 600. FIG. 6 illustrates a coupling state among the tub 100 and 120, the bearing housing 400 and the suspension unit 40.

The bearing housing 400 include a bearing supporting part 401 configured to support a bearing. A tub back securing part 407 configured to secure the tub back 250 thereto is formed in a front portion of the bearing housing 400 and a stator securing part 402 configured to secure the stator of the motor thereto is formed in a rear portion of the bearing housing 400.

Here, the suspension unit 40 includes a first oblique bracket 431, a second oblique bracket 430, a first suspension bracket 450 and a second suspension bracket 440.

A first extension 406a and a second extension 406b extended from right and left side portions of the bearing housing 400 in a radius direction, respectively. The first oblique bracket 431 and the second oblique bracket 430 are connected to the first extension 406a and the second extension 406b, respectively. The first suspension bracket 450 and the second suspension bracket 440 are connected to the first oblique bracket 431 and the second oblique bracket 430, respectively.

Here, the shapes of the first extension 406a, the first oblique bracket 431, and the first suspension bracket 450, the second extension 406b, the second oblique bracket 430 and the second suspension bracket 440 are corresponding to each other. When the laundry is loaded in the drum, the first and second oblique brackets 431 and 430 are used to balance the center of gravity and they are used as mass in the vibration system of the drum.

The suspension unit 40 includes a first spring cylinder damper 520, a second spring cylinder damper 510 and a third spring cylinder damper 500 which are arranged vertically for the vertical suspension and a first cylinder damper 540 and a second cylinder damper 530 which are arranged obliquely for the backward suspension.

Here, a single one of the first spring cylinder damper 520, the second spring cylinder damper 510 and the third spring cylinder damper 500 may be arranged in a rear portion and the other two may be arranged in front right and left portions with respect to a center of the base 600. The first cylinder damper 540 and the second cylinder damper 530 may be arranged oblique forward and backward from rear right and left sides with respect to the center of the base 600, respectively.

Specifically, the first spring cylinder damper 520 is connected between the first suspension bracket 450 and the base 600. The second spring cylinder damper 510 is connected between the second suspension bracket 440 and the base 600. The third spring cylinder damper 500 is directly connected between the bearing housing 400 and the base 600.

The first cylinder damper 540 is obliquely installed between the first suspension bracket 450 and a rear portion of the base and the second cylinder damper 530 is obliquely installed between the second suspension bracket 440 and a rear portion of the base 600.

That is, the third spring cylinder damper 500 is arranged in a center of the rear portion and the first spring cylinder damper 520 and the second spring cylinder damper 510 are arranged in right and left sides of the rear portion. The first cylinder damper 540 and the second cylinder damper 530 are located on right and left sides of the third spring cylinder damper 500. That is, the spring cylinder dampers 500, 510 and 520 and the cylinder dampers 530 and 540 are vertically symmetrical.

As follows, a tub front and a tub rear according to an embodiment of the present invention will be described in the accompanying drawings.

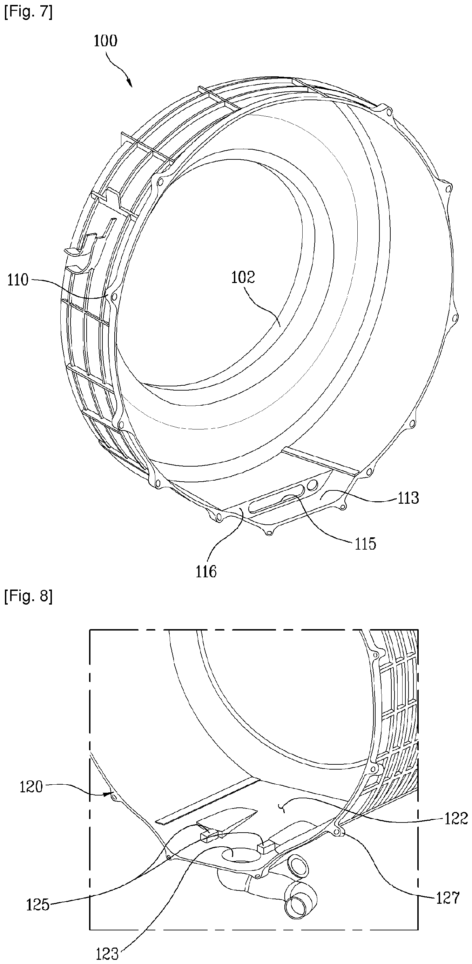

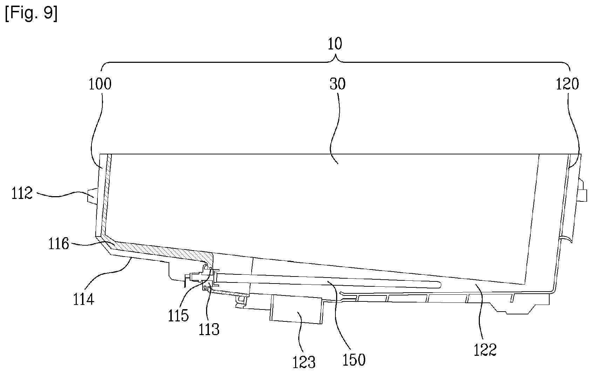

FIG. 7 is a rear perspective view illustrating a tub front of the laundry machine according to the present invention. FIG. 8 is a front perspective view illustrating a tub rear of the laundry machine according to the present invention. FIG. 9 is a sectional view illustrating a heater sump of the laundry machine according to the present invention.

As shown in FIG. 7, a front heater securing part 113 is formed in a lower portion of an outer circumference of a tub 100 and a heater (150, see FIG. 9) configured to heat the wash water received in the tub 10.

The front heater securing part 113 is distant in a backward direction from a front surface of the tub front 100. Because of that, space enough to install the other components of the laundry machine (e.g. main control device) may be secured.

According to the laundry machine of the present invention, the tub 10 may be enlarged enough to be closely close to or to contact with the cabinet 60. In this case, it is difficult to secure installation space for the other components and the configuration such as the front heater securing part 113 is advantageous to install the other components. If the front surface of the tub10 is tilted upward, more installation space for the other components may be secure.

A flat part (114, see FIG. 2) may be formed in a front lower portion of the tub 10. The outer circumferential surface of the tub 10 is approximately curved and the flat part 114 is formed flat. An outer shape of the front surface is approximately a circumference, except the flat part 114.

Since the tub 10 is tilted, a front portion of the flat part 114 is higher than a rear portion thereof. A heater 150 is inserted from the rear portion of the flat part 114 into the tub. A bottom of the tub 10 includes a heater inserting part extended downward from a rear end of the flat part 114 and the heater 150 is inserted in the heater inserting part via a securing hole 115 formed in the heater inserting part 116.

A water wall rib 112 is further formed in the front surface of the tub front 100, beyond the flat part 112, to prevent leaking water generated from the front surface from flowing to the flat part 114. This is because the heater 150 located below the leaking water should not make the flat part 114 have a short circuit. This water wall rib 112 may have a convex center to make the leaking water flow along both sides of the water wall rib 112.

In this case, another rib extended to the lower part of the tub front 100 may be further provided adjacent to the water wall rib 112. The rightward and leftward width of the water wall rib 112 may be as large as to cover a terminal of the heater 150 located under the water wall rib.

The front heater securing part 113 is projected downward a predetermined distance from a lower surface of the tub front 100. This is because the heater 150 should not interfere with the drum rotating in the tub 10. The front heater securing part 113 will be described in detail, after describing the tub rear 120 and a rear heater securing
part (122, see FIG. 9) formed in the tub rear 120.

A rear heater securing part 122 corresponding to the front heater securing part 113 is provided in an inner bottom of a tub rear body, oblique to a front part of the tub rear 120, and an end of the heater 150 is located in the rear heater securing part 122 to drain the wash water held in the tub 10. This rear heater securing part 122 is employed as drainage sump configured to drain wash water, because the tub rear 120 is coupled to the tub front 100.

A drainage hole 123 is formed in the rear heater securing part 122 and a drainage hose (not shown) is connected with the drainage hole 123 to flow the wash water drained via the drainage hole 123 thereto. For that, first and second oblique surfaces125, which are oblique downward to the drainage hole 123, are formed in lower surfaces of the front heater securing part 113 and the rear heater securing part 122.

An end of the heater 150 secured in the front heater securing part 113 and the rear heater securing part 122 is oblique downward at a predetermined angle, to prevent contact with the drum 30 when vibration is generated by the rotation of the drum 30. The oblique angle of the heater 150 may be smaller than the tilting angle of the tub 10. If the oblique angle of the heater 150 is larger than the tilting angle of the tub 10, the front heater securing part 113 and the rear heater securing part 122 may be more projected downward. Because of that, spacious limitation may be generated.

Also, in a state that the lower surface of the drum 30 is placed on the lower surface of the tub 10 by dropping the drum to the lower surface of the tub rightly, the heater 150 may be located below the lower surface of the drum 30. Once the tub 10 and the drum 30 are assembled, the heater 150 is secured to the cabinet base 600. At this time, if the drum 30 is lost, the drum 30 happens to fall down to the lower surface of the tub 10. Because of that, in an aspect of the protection of the heater 150, the heater 150 may be located as mentioned above. For that, if a straight line is drawn from a front top of the front heater securing part 113 to a rear top of the rear heater securing part 122, the heater 150 may be located under the straight line.

In the meanwhile, the distance from the lower surface of the tub rear 120 to the lower surface of the rear heater securing part 122, that is, the height of the rear heater securing part 122 may be getting decreased more and more as coming along backward. In case the tub 10 is tilted, a vertical distance between the rear part of the tub and the cabinet base 600 is smaller than a vertical distance between the front part of the tub 10 and the cabinet base 600.

As a result, a sectional shape of the inner space of the heater securing part formed by the front heater securing part 113 and the rear heater securing part 122 may be an inverted triangle with the drainage hole 123 as a summit, seen in the side (see Fig. 9).

As follows, the connecting structure of the tub back 130 and the bearing housing 400 of the laundry machine according to the present invention will be described.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. A laundry machine comprising: a tub (10) configured to receive wash water and comprising a tub front (100) configured to form a front part of the tub (10) and a tub rear (120) configured to form a rear part of the tub (10);
a drum (30) rotatably placed in the tub (10);
a driving part comprising a shaft (351) connected with the drum (30), a bearing housing (400) to rotatably support the shaft (351) and a motor configured to rotate the shaft (351);
a suspension unit (40) configured to reduce vibration of the drum (30); and a heater securing part (113, 122) expanded to an outside of the tub (10) from a lower part of the tub (10), the heater securing part (113, 122) configured to install the heater (150) to heat the wash water therein;
**characterized in that**
the heater securing part (113, 122) comprises a front heater securing part (113) formed in a lower part of the tub front (100) and a rear heater securing part (122) formed in a lower part of the tub rear (120), and
the heater (150) is obliquely installed to locate a rear end thereof below a front end thereof.

2. The laundry machine as claimed in claim 1, wherein a lower front surface of the tub (10) is cut and recessed backward to form a front surface of the heater securing part (113, 122).

3. The laundry machine as claimed in claim 2, wherein a heater (150) is inserted through the front surface of the heater securing part (113, 122).

4. The laundry machine as claimed in claim 3, wherein the front surface of the heater securing part (113, 122) has a hole configured to secure the heater (150) thereto.

5. The laundry machine as claimed in claim 4, wherein the front surface of the tub (10) includes a water wall rib (112) having a center which is convex upward above the cut flat portion to detour water away from the heater mounted portion.

6. The laundry machine as claimed in claim 1, wherein the heater securing part (113, 122) is a sump configured to collect wash water therein.

7. The laundry machine as claimed in claim 1, wherein a lower front surface of the tub front (100) is cut and recessed backward to form a front surface of the heater securing part (113, 122).

8. The laundry machine as claimed in claim 1, wherein a drainage hole is formed in a center of the rear heater securing part (122) to drain the wash water there through.

9. The laundry machine as claimed in claim 8, wherein both sides of the rear heater securing part (122) are oblique upward with respect to the drainage hole.

10. The laundry machine as claimed in claim 1, wherein the suspension unit (40) is connected with the bearing housing (400).

11. The laundry machine as claimed in claim 10, wherein the suspension unit (40) comprises an axially-extended bracket extended in a rotational axis direction of the drum (30).

12. The laundry machine as claimed in claim 1, further comprising a rear gasket (250) configured to seal between the tub (10) and the driving part to prevent wash water from leaking between the tub (10) and the driving part and to allow the driving part to move relatively to the tub (10).

## Patentansprüche

1. Waschmaschine, die Folgendes umfasst: einen Bottich (10), der konfiguriert ist, Waschwasser aufzunehmen, und der eine Bottichvorderseite (100), die so konfiguriert ist, dass sie einen vorderen Teil des Bottichs (10) bildet, und eine Bottichrückseite (120), die so konfiguriert ist, dass sie einen hinteren Teil des Bottichs (10) bildet, umfasst;
eine Trommel (30), die in dem Bottich (10) drehbar angeordnet ist;
ein Antriebsteil, das eine Welle (351), die mit der Trommel (30) verbunden ist, ein Lagergehäuse (400) zum drehbaren Halten der Welle (351) und einen Motor, der konfiguriert ist, die Welle (351) zu drehen, umfasst;
eine Aufhängungseinheit (40), die so konfiguriert ist, dass sie eine Schwingung der Trommel (30) verringert; und ein Heizelementbefestigungsteil (113, 122), das sich von einem unteren Teil des Bottichs (10) zu einer Außenseite des Bottichs (10) erstreckt, wobei das Heizelementbefestigungsteil (113, 122) konfiguriert ist, das Heizelement (150) zu installieren, um das Waschwasser darin zu erhitzen;
**dadurch gekennzeichnet, dass**
das Heizelementbefestigungsteil (113, 122) ein vorderes Heizelementbefestigungsteil (113), das in einem unteren Teil der Bottichvorderseite (100) ausgebildet ist, und ein hinteres Heizelementbefestigungsteil (122), das in einem unteren Teil der Bottichrückseite (120) ausgebildet ist, umfasst, und
das Heizelement (150) schräg so installiert ist, dass sich ein hinteres Ende unterhalb eines vorderen Endes befindet.

2. Waschmaschine nach Anspruch 1, wobei eine untere vordere Oberfläche des Bottichs (10) ausgeschnitten und nach hinten vertieft ist, um eine vordere Oberfläche des Heizelementbefestigungsteils (113, 122) zu bilden.

3. Waschmaschine nach Anspruch 2, wobei ein Heizelement (150) durch die vordere Oberfläche des Heizelementbefestigungsteils (113, 122) eingesetzt ist.

4. Waschmaschine nach Anspruch 3, wobei die vordere Oberfläche des Heizelementbefestigungsteils (113, 122) ein Loch aufweist, das konfiguriert ist, das Heizelement (150) daran zu befestigen.

5. Waschmaschine nach Anspruch 4, wobei die vordere Oberfläche des Bottichs (10) eine Wasserwandrippe (112) umfasst, die ein Zentrum aufweist, das über dem ausgeschnittenen flachen Abschnitt konvex nach oben verläuft, um Wasser um den Heizelementbefestigungsabschnitt zu leiten.

6. Waschmaschine nach Anspruch 1, wobei das Heizelementbefestigungsteil (113, 122) eine Wanne ist, die konfiguriert ist, Waschwasser zu sammeln.

7. Waschmaschine nach Anspruch 1, wobei eine untere vordere Oberfläche der Bottichvorderseite (100) ausgeschnitten und nach hinten vertieft ist, um eine vordere Oberfläche des Heizelementbefestigungsteils (113, 122) zu bilden.

8. Waschmaschine nach Anspruch 1, wobei ein Abflussloch in einem Zentrum des hinteren Heizelementbefestigungsteils (122) ausgebildet ist, um Waschwasser dort hindurch abzuführen.

9. Waschmaschine nach Anspruch 8, wobei beide Seiten des hinteren Heizelementbefestigungsteils (122) in Bezug auf das Abflussloch schräg nach oben gerichtet sind.

10. Waschmaschine nach Anspruch 1, wobei die Aufhängungseinheit (40) mit dem Lagergehäuse (400) verbunden ist.

11. Waschmaschine nach Anspruch 10, wobei die Aufhängungseinheit (40) eine axial verlaufende Halterung umfasst, die sich in Richtung einer Drehachse der Trommel (30) erstreckt.

12. Waschmaschine nach Anspruch 1, die ferner eine hintere Dichtung (250) umfasst, die so konfiguriert ist, dass sie zwischen dem Bottich (10) und dem Antriebsteil abdichtet, um zu verhindern, dass Waschwasser zwischen dem Bottich (10) und dem Antriebsteil ausläuft, und so, dass sich das Antriebsteil in Bezug auf den Bottich (10) bewegen kann.

## Revendications

1. Machine à laver le linge comprenant :
une cuve (10) configurée pour recevoir de l'eau de lavage et comprenant un avant de cuve (100) configuré pour former une partie avant de la cuve (10) et une partie arrière de cuve (120) configurée pour former une partie arrière de la cuve (10) ;
un tambour (30) placé rotatif dans la cuve (10) ;
une partie d'entraînement comprenant un arbre (351) relié au tambour (30), un logement de palier (400) pour supporter l'arbre (351) en rotation et un moteur configuré pour faire tourner l'arbre (351) ;
une unité de suspension (40) configurée pour réduire les vibrations du tambour (30) ; et une partie de fixation de chauffage (113, 122) s'étendant vers l'extérieur de la cuve (10) depuis une partie inférieure de la cuve (10), la partie de fixation de chauffage (113, 122) étant configurée pour installer le dispositif de chauffage (150) pour chauffer l'eau de lavage dans celui-ci;
**caractérisée en ce que**
la partie de fixation de chauffage (113, 122) comprend une partie de fixation de chauffage avant (113) formée dans une partie inférieure de l'avant de cuve (100) et une partie de fixation de chauffage arrière (122) formée dans une partie inférieure de l'arrière de cuve (120), et
le dispositif de chauffage (150) est installé en oblique pour localiser une extrémité arrière de celui-ci sous une extrémité avant de celui-ci.

2. Machine à laver le linge selon la revendication 1, dans laquelle une surface avant inférieure de la cuve (10) est coupée et en retrait vers l'arrière pour former une surface avant de la partie de fixation de chauffage (113, 122).

3. Machine à laver le linge selon la revendication 2, dans laquelle un dispositif de chauffage (150) est inséré à travers la surface avant de la partie de fixation de chauffage (113, 122).

4. Machine à laver le linge selon la revendication 3, dans laquelle la surface avant de l'élément de fixation de chauffage (113, 122) présente un trou configuré pour fixer le dispositif de chauffage (150) sur celle-ci.

5. Machine à laver le linge selon la revendication 4, dans laquelle la surface avant de la cuve (10) comprend une nervure de paroi d'eau (112) ayant un centre qui est convexe vers le haut au-dessus de la partie plate coupée pour détourner l'eau en éloignement de la partie montée sur le dispositif de chauffage.

6. Machine à laver le linge selon la revendication 1, dans laquelle l'élément de fixation de chauffage (113, 122) est un puisard configuré pour recueillir l'eau de lavage dans celui-ci.

7. Machine à laver le linge selon la revendication 1, dans laquelle une surface avant inférieure de l'avant de cuve (100) est coupée et en retrait vers l'arrière pour former une surface avant de la partie de fixation de chauffage (113, 122).

8. Machine à laver le linge selon la revendication 1, dans laquelle un trou de drainage est formé dans un centre de la partie arrière de fixation de chauffage (122) pour drainer l'eau de lavage à travers celui-ci.

9. Machine à laver le linge selon la revendication 8, dans laquelle les deux côtés de la partie arrière de fixation de chauffage (122) sont obliques vers le haut par rapport au trou de drainage.

10. Machine à laver le linge selon la revendication 1, dans laquelle l'unité de suspension (40) est reliée au logement de palier (400).

11. Machine à laver le linge selon la revendication 10, dans laquelle l'unité de suspension (40) comprend un support s'étendant axialement dans la direction de l'axe de rotation du tambour (30).

12. Machine à laver le linge selon la revendication 1, comprenant en outre un joint arrière (250) configuré pour assurer l'étanchéité entre la cuve (10) et la partie d'entraînement pour empêcher des fuites de l'eau de lavage entre la cuve (10) et la partie d'entraînement et pour permettre à la partie d'entraînement de se déplacer par rapport à la cuve (10).
